# EUROPÄISCHE PATENTSCHRIFT

(11) **EP 0 674 558 B1**
(45) Veröffentlichungstag und Bekanntmachung des Hinweises auf die Patenterteilung: **26.05.1999**
(21) Anmeldenummer: 94900051.7
(22) Anmeldetag: 18.11.1993
(51) Int. Cl.: B23B 27/14, B23B 51/04

(54) **SCHNEIDEINSATZ**
CUTTING INSERT
INSERT DE COUPE

(30) Priorität: 21.11.1992 DE 9215855 U
(43) Veröffentlichungstag der Anmeldung: 04.10.1995
(73) Patentinhaber: Widia GmbH, 45145 Essen (DE)
(72) Erfinder: WEGENER, Manfred, D-45279 Essen (DE); VON HAAS, Rainer, D-21502 Geesthacht (DE)
(74) Vertreter: Vomberg, Friedhelm, Dipl.-Phys.
(86) Internationale Anmeldenummer: DE9301109
(87) Internationale Veröffentlichungsnummer: WO9412303

(56) Entgegenhaltungen:
- DE-A- 2 845 211
- PATENT ABSTRACTS OF JAPAN vol. 8, no. 104 (M-296)(1541) 16. Mai 1984 & JP,A,59 016 910 (MITSUBISHI KINZOKU) 28. Januar 1984
- PATENT ABSTRACTS OF JAPAN vol. 8, no. 104 (M-296)(1541) 16. Mai 1984 & JP,A,59 016 911 (MITSUBISHI KINZOKU) 28. Januar 1984

## Beschreibung

Die Erfindung betrifft einen Schneideinsatz für die spanende Bearbeitung, insbesondere zum Bohren, mit mindestens einer Schneidkante, einer hieran zur Schneideinsatzspanflächenmitte hin anschließenden Fase, einer parallel zur Schneidkante durchgehend verlaufenden Spanformnut und sich entlang und parallel der Schneidkante jeweils voneinander getrennt erstreckenden Spanformelementen.

Derartige Schneideinsätze sind beispielsweise in der DE-A-22 31 631 beschrieben, die als nächstliegender Stand der Technik anzusehen ist. In dieser Veröffentlichung wird auch ausgeführt, daß ein frühzeitiges Brechen der Späne im Sinne einer Kurzspanbildung bereits durch eine konkave Nut oder konkave Nuten möglich ist, die jeweils im Querschnitt eine bogenförmige oder halbkreisförmige Gestalt aufweisen. Allerdings wird dort die Lösung einer Doppelnut als nachteilig verworfen. Zum besseren Spanbruch wird in einer einzigen Nut mindestens ein Vorsprung in Eckennähe vorgeschlagen.

Die DE 25 15 686 C3 zeigt ein Schneidwerkzeug, bei dem sich an die Fase eine abfallende Flanke anschließt, die ggf. auch Teil einer Spanbrechernut sein kann, wobei Vertiefungen in rechteckiger oder dreieckigen Grundform in der abfallenden Flanke vorgesehen sind, die sich bis in den Bereich der Fase erstrecken. Erhabene kugelsegmentartige oder kegelstumpfförmige Spanformelemente mit unterschiedlichen Grundformen zeigt auch die US-A-4 214 845, wobei die Spanformelemente jeweils gegenüber der Schneidkante erhöht und diese überragend ausgeführt sind. Pyramidenstumpfförmige Spanformelemente mit im wesentlichen dreieckiger Grundfläche zeigt die DE 31 48 535 C2, wobei jeweils eine der Grundflächenbegrenzungslinien der Spanformelemente in Richtung der benachbarten Schneidkante ausgerichtet ist.

Die EP 0 208 668 B1 beschreibt einen Schneideinsatz mit zumindest teilweise in der gekrümmten Spanbrechfläche (Spanbrechnut) angeordneten Vertiefungen, die jedoch über die Spanbrechnut hinaus auch in den Bereich der angrenzenden Fase reichen. In entsprechender Weise sind z.B. aus der EP 0 168 555 A1 oder der EP 0 222 317 A1 Schneideinsätze mit erhabenem Mittelteil bekannt, bei denen von diesem erhabenen Mittelteil semizirkulare Projektionen in Richtung der Schneidkante überstehend hinausragen. Umgekehrt kann auch die zum erhabenen Mittelteil (Plateau) ansteigende Flanke mit Auskerbungen versehen sein, wie dies aus der US-A-4 880 338 ersichtlich ist.

Alle vorgenannten Ausführungsformen sollen dazu dienen, den Spanbruch zu begünstigen. Grundsätzlich beruht der Spanbruch darauf, daß der ablaufende Span über die Bruchdehnung hinaus deformiert wird. Im Querschnitt dickere Späne brechen leichter als dünne Späne, allerdings wird die Spandicke im wesentlichen durch das zu bearbeitende Werkstück bzw. dessen stoffliche Eigenschaften bestimmt. Eine weitere Einflußnahme zum Spanbruch kann über die ihm auf der Spanablauffläche erteilte Krümmung ausgeübt werden. Je kleiner der Radius einer Spanbrechnut ist, desto stärker wird der Span gekrümmt. Nachteilig ist hierbei jedoch, daß die Zerspankräfte und die Belastung der Wendeschneidplatte zunehmen. Die weiterhin mit dem Spanbruch verbundenen dynamischen Kräfte führen zu unerwünschten Schwingungen im Zerspanungsprozeß.

Eine weitere wesentliche Möglichkeit zur Spanbeeinflussung besteht in der sickenförmigen Ausbildung des Spanquerschnittes, sei es durch Erhebungen in Form von Kugelsegmenten, Rippen oder ähnlichem oder in Form von Sicken entsprechender Gestaltung.

Es ist Aufgabe der vorliegenden Erfindung, den eingangs genannten Schneideinsatz dahin weiterzuentwickeln, daß die Oberflächentopographie der Spanfläche für unterschiedliche Schnittbedingungen und unterschiedliche Werkstückbearbeitungen ausgelegt ist, insbesondere soll die Ausgestaltung einen großen Vorschub ebenso erlauben wie lange Werkzeugstandzeiten ermöglichen.

Diese Aufgabe wird durch den im Anspruch 1 beschriebenen Schneideinsatz gelöst. Dieser besitzt entweder zwei parallel zur Schneidkante durchgehend verlaufende Spanformnuten und sich entlang und parallel der Schneidkante jeweils voneinander getrennt erstreckende Spanformelemente, die jeweils vollständig in einer Spanformnut oder im Übergangsbereich zwischen den Spanformnuten angeordnet sind. Alternativ hierzu besitzt der Schneideinsatz nur eine parallel zur Schneidkante durchgehend verlaufende einzige Spanformnut mit mindestens zwei zur Schneidkante parallelen Reihen von erhabenen und/oder sickenförmigen Spanformelementen,, die im unterschiedlichen Abstand zur Schneidkante liegen und seitlich gegeneinander versetzt sind. Die genannte Ausbildung der Spanflächengeometrie ist für alle Schneideinsätze verwendbar, also insbesondere auch bei im wesentlichen dreieckförmigen, rhombischen oder auch solchen Schneideinsätzen mit runder Schneide. Erst die Kombination der Doppelnut bzw. zwei hintereinanderliegender Spanformnuten mit dort vorgesehenen Spanformelementen sichert insbesondere beim Bohren die gewünschte Kurzspanbildung bei minimierten Zerspankräften. Die Spanformelemente können Vertiefungen und/oder Erhöhungen sein, beispielsweise auch in der Form, daß in der ersten Spanformnut Vertiefungen und in der dahinterliegenden Nut Erhöhungen oder umgekehrt vorgesehen sind. Weitere Ausgestaltungen der Erfindung sind in den Ansprüchen 2 bis 10 beschrieben.

Ordnet man die Vertiefungen im vorderen schneidkantennahen Bereich an, wird der erzeugte Span in seiner Längsrichtung zusätzlich verformt. Die erste Spanformnut erzeugt nun eine Wendel, die durch äußere Kräfte, wie die Schwerkraft, Zentrifugalkraft oder durch deren Anstoßen an den Bohrer bzw. das Zerspanungswerkzeug oder an die gefertigte Bohrung, lang wird. Stößt der länger gewordene Span an das Ende der zweiten Spanformnut, bricht diese den Span, der durch die Vertiefung im vorderen Bereich der ersten Spanformnut "versteift worden ist". Entsteht bei erhöhtem Vorschub ein dickerer Span mit einem entsprechend höheren Widerstandsmoment, so wird dessen Steifigkeit weiterhin durch die erfindungsgemäß vorhandenen kalottenförmigen Sicken oder Erhöhungen versteift. Bei relativ großem Vorschub wird der Span ohne vorherige Krümmung auf das Ende der zweiten Spanformnut auftreffen, wo er umgelenkt wird. Hier bricht jedoch der Span, da das Widerstandsmoment des Spanes mit dem höheren Vorschub größer ist und daher bei gleichem Knickwinkel des Spanes eher ein Bruch erfolgt. Durch die hintereinanderliegenden Spanformnuten werden somit große Vorschubbereiche möglich, auch können mit ein und demselben Werkzeug verschiedene Werkstoffe mit entsprechend unterschiedlicher Spanbildung beim Zerspanen bearbeitet werden.

Die Standzeit des Schneideinsatzes ist für den sicheren Zerspanungsprozeß von entscheidender Bedeutung. Schneidkantennahe Vertiefungen bedeuten eine Schwächung und bergen die Gefahr für einen vorzeitigen Schneidenausbruch. Aus diesem Grund ist es wesentlich, daß die Vertiefungen einen Abstand von der Schneidkante einhalten. Als optimal hat sich ein Abstand der Vertiefungen zur Schneidkante von 0,5- bis 1-fachem Vorschub (mm/Umdrehung) erwiesen.

Bevorzugt werden Kombinationen, bei denen in der schneidkantennahen Spannut Vertiefungen und in der schneidkantenferneren Spannut weitere Vertiefungen und/oder Erhöhungen angeordnet sind. Insbesondere können bei Kombinationen von schneidkantennahen Vertiefungen mit weiteren Vertiefungen oder Erhöhungen im schneidkantenferneren Bereich Bedingungen geschaffen werden, bei denen der Span zusätzliche Querkräfte erfährt, insbesondere dann, wenn in Spanablaufrichtung die hintereinanderliegenden Vertiefungen und/oder Erhöhungen gegeneinander seitlich versetzt sind. Die hierdurch entstehenden Querkräfte fördern zusätzlich den Spanbruch.

Umgekehrt können in der schneidkantennahen Spannut erhabene Spanformelemente (Erhöhungen) angeordnet sein, die zwar die Spankräfte regelmäßig erhöhen, aber andererseits Vorteile bei der Spanausbildung bringen. Der Span erhält eine wellblechartige Form, die durch die geschilderte versetzte Anordnung der Spanformelemente in der schneidkantenfernen Spannut einer zusätzlichen Querkraft unterworfen wird, wodurch der Spanbruch verbessert wird.

In einer weiteren alternativen Ausführungsform der Erfindung sind in der einzigen Spanformnut zwei zur Schneidkante parallele Reihen von erhabenen und/oder sickenförmigen Spanformelementen vorgesehen, wobei die in unterschiedlichem Abstand zur Schneidkante liegenden Spanformelemente seitlich gegeneinander versetzt sind. Auch durch diese Ausführungsform ergibt sich der oben beschriebene durch Querkräfte bedingte Vorteil bei der Spanausbildung.

Vorzugsweise sind die Spanformelemente unterschiedlich groß, wobei insbesondere die Spanformelemente im schneidkantenferneren Bereich größer sind als solche im schneidkantennahen Bereich.

Bevorzugt wird ein Schneideinsatz verwendet, dessen Neuerung darin besteht, daß jede eine Hauptschneidkante begrenzende Schneidecke jenseits der Schneidecke eine als Nebenschneidkante ausgebildete Verlängerung aufweist, die im wesentlichen der Bohrlochlängsachse parallel oder hiergegen unter einem Winkel unter 10° leicht geneigt ist. Diese Nebenschneidkante bewirkt, daß die Bohrlochwand beim Schneidkantenvortrieb ein Schlichten der bereits geschaffenen Bohrlochmantelflächen herbeiführt. Da die Schneidecke beim Bohrvortrieb eine wendelförmige Kurve beschreibt, ergibt sich ohne die erfindungsgemäße Verlängerung in einer Bohrlochquerschnittsansicht jeweils zwischen zwei aufeinanderfolgenden Vorschubpositionen ein Grat, der durch die Nebenschneidkante in Form eines Schlichtens abgetragen wird. Wesentlich ist, daß die für dieses Abtragen erforderliche Nebenschneide im wesentlichen parallel der Bohrlochlängsachse oder hiergegen unter einem kleinen Winkel leicht geneigt ist. Die Neigung soll vorzugsweise 1 bis 2° gegen die Bohrlochlängsachse nicht überschreiten.

Nach einer weiteren Ausgestaltung der Erfindung soll die Länge der als Nebenschneide ausgebildeten Verlängerung etwa der Vorschublänge bei einer Umdrehung des Bohrers entsprechen, vorzugsweise bei kleinen Bohrern bis 20 mm Bohrlochdurchmesser bis zu 2/10 mm und bei großen Bohrern bis zu 60 mm Bohrlochdurchmesser bis zu 4/10 mm betragen. Der Schneideckenradius beträgt vorzugsweise 0,2 bis 1,2 mm.

Die Schneidecke kann hierbei entweder durchgehend abgerundet ausgebildet sein oder kurze gerade Schneideckenbereiche aufweisen, etwa in Form einer Anfasung.

Die betreffenden Schneideinsätze können an ihrer Hauptschneidkante eine oder mehr Schneidspitzen aufweisen. Vorzugsweise besitzt der Schneideneinsatz zwei vorstehende Schneidspitzen pro Schneidkante, wodurch erreicht wird, daß eine einzige Wendeschneidplatte mehr als einen Schneidbereich für den Span erhält, was mit einer verbesserten Spanabfuhr einhergeht. Auch kann mit einer entsprechenden Ausrichtung dieser Schneidplatte die Zentrierung des Bohrers erheblich verbessert werden.

Insbesondere soll nach einer weiteren Ausgestaltung der Schneidkante die Anzahl der Schneidspitzen der Anzahl der Schneidbereiche entsprechend gleich groß sein. Dies bedeutet bei einer Wendeschneidplatte mit zwei Schneidspitzen die Ausbildung von zwei Schneidbereichen, über die jeweils im Durchmesser schmalere Späne ausgebildet werden, die letztlich beim Bohren die Spanabfuhr erleichtern und auch leichter gebrochen werden können.

Nach einer weiteren Ausgestaltung der Erfindung besitzt jede der Schneidkanten eine im wesentlichen konkave Form mit einer Einschnürung, die sich vorzugsweise in der Mitte der Schneidkante befindet. In Abkehr der bisher verwendeten sechseckigen Schneidplatten mit jeweiligem stumpfen Winkel zwischen zwei aneinandergrenzender Schneidkanten in Form einer "Ausstülpung" wird erfindungsgemäß die Schneidkantenmitte gegenüber einer Verbindungslinie zweier benachbarter Schneidecken nach hinten versetzt angeordnet, wodurch zwei Schneidbereiche pro Schneidkante geschaffen werden. Vorzugsweise werden durch die Einschnürung zwei Schneidkantenteilbereiche gebildet, die einen äußeren Winkel von weniger als 176° einschließen. Insbesondere liegt dieser Winkel zwischen 145 und 170°. Der betreffende Winkel liegt nach einer besonderen Ausgestaltung der Erfindung zwischen 150° und 170°, vorzugsweise zwischen 160° und 170°.

Die Ausbildung der Schneidspitzen einer jeden Schneidkante kann insbesondere durch die Schneidecken oder hieran angrenzende Schneidkantenteilbereichshälften gebildet werden. In beiden Fällen liegt die Schneidspitze einer jeden Schneidkante nahe der Ecke. Wird die Schneidspitze durch eine Schneidecke gebildet, so soll diese vorzugsweise abgerundet sein. Eine im Eckenbereich angeordnete Schneidspitze kann vorzugsweise dadurch geschaffen werden, daß die Ecke mit einem vergrößerten Eckenwinkel ausgeführt ist. Hierbei sollen vorzugsweise die zwei Schneidspitzen einer Schneidkante etwa in der jeweiligen eckennahen Schneidkantenbereichshälfte angeordnet sein.

Schneideinsätze in einer rhombenförmigen oder dreieckigen Grundform mit einem in der Schneidecke angeordneten Nasenabschnitt oder wenigstens einer mit dem Nasenabschnitt verbundenen Hauptschneidkante, bei der der Nasenabschnitt in der Breitenrichtung an einer spitzwinkligen Schneidenecke verlängert ist und aus einer Anzahl gekrümmter Segmente besteht, die im wesentlichen symmetrisch um eine Mittellinie der Schneidecke angeordnet sind, sind zwar aus der EP 0 162 029 B1 bekannt, jedoch dient dieser Schneideinsatz speziellen hier nicht angesprochenen Einsatzzwecken, wie dem Längsdrehen, Einwärts-Nachformdrehen, Schleifreliefdrehen und Auswärts-Nachformdrehen. Bei diesem Schneideinsatz dient auch nur der Nasenabschnitt als verkürzte wirksame Schneidkante, so daß dieser Schneideinsatz praktisch nur für die genannten Zwecke, nicht jedoch zum Bohren verwendbar ist.

Weiterhin bevorzugt soll der Abstand der Einschnürung zur Schneidspitze in Bezug auf eine Vertikale zur Verbindungslinie der Schneidecken im Bereich zwischen 0,1 und 1,8 mm liegen. Mit diesem Abstand ist der Abstand zweier paralleler Linien gemeint, die durch den Talpunkt der Einschnürung einerseits und durch die Spitze der Schneidecken andererseits laufen und die parallel zur Verbindungslinie der Schneidecken verlaufen.

Vorzugsweise ist jede Schneidkante in Bezug auf ihre Mittelsenkrechte achsensymmetrisch ausgebildet.

Der Bereich der genannten Einschnürung kann durch entsprechende Ausgestaltung der Schneidplattenseitenflächen eckig ausgeführt sein, vorzugsweise wird er jedoch abgerundet. Insbesondere soll der Schneideinsatz eine im wesentlichen dreieckige oder viereckige Form (in einer Draufsicht gesehen) haben und/oder als Wendeschneidplatte ausgebildet sein.

Hinsichtlich der Ausgestaltung der Seitenflächen bzw. Freiflächen unter Bildung eines Freiwinkels sowie der Spanflächen kann auf die grundsätzlich nach dem Stand der Technik bekannten Ausführungsformen zurückgegriffen werden. Die Spanfläche kann beispielsweise im Anschluß an die Schneidkante eine Fase und/oder eine Spanbrechernut sowie Spanformelemente besitzen.

Des weiteren kann die vorliegende Erfindung auch bei solchen Schneideinsätzen realisiert werden, bei denen eine Hauptschneide derart gebrochen ist, daß die Schneidkantenhälften einen stumpfen Winkel an der Bruchstelle bilden. Auch bei dieser Ausführungsform ist die die Schneidkantenhälften begrenzende Schneidecke jeweils mit einer als Nebenschneidkante dienenden Verlängerung ausgestattet, wobei die Nebenschneidkante im wesentlichen parallel der Winkelhalbierenden des stumpfen Winkels oder der Bohrlochmittelachse ist oder zu einer der beiden Linien geringfügig geneigt ist.

Insbesondere werden nach einer Weiterbildung der Erfindung auch solche Schneideinsätze angesprochen, die in einer Spanflächendraufsicht eine im wesentlichen rechteckige Kontur besitzen, wobei zwei gegenüberliegende Seitenflächen mit ihren Schneidkanten in der Mitte zu einer Schneidspitze so gebrochen sind, daß sie jeweils einen stumpfen Winkel an der Bruchstelle bilden und daß jede der vier gebildeten Schneidecken eine als Nebenschneidkante ausgebildete Verlängerung aufweist, die gegenüber den längeren Seitenflächen einen Vorsprung bildet, der unter einem spitzen Winkel in die längere Seitenfläche übergeht. Grundsätzlich ist die rechteckige Schneidplattenform beispielsweise aus der EP 0 181 844 B1 bekannt, jedoch mangelt es den die aktiven Hauptschneiden begrenzenden Schneidecken an einer Nebenschneide, die zum Schlichten des Bohrlochinnenmantels geeignet ist. Nach der vorliegenden Erfindung geht nämlich der Vorsprungabschnitt nicht, wie beim Schneideinsatz nach der EP 0 181 844 B1, unter einem spitzen Winkel in die lange Seitenfläche über, sondern die Schneidecke besitzt eine echte Nebenschneide, bevor sie unter dem spitzen Winkel von vorzugsweise 15 bis 25° in die nicht als Schneide ausgebildete Seitenfläche übergeht.

Vorzugsweise besitzt der Schneideinsatz eine im wesentlichen dreieckige oder viereckige Grundform und/oder ist als Wendeschneidplatte ausgebildet.

Ausführungsbeispiele der Erfindung sind in den Zeichnungen dargestellt. Es zeigen
- Fig. 1: eine Draufsicht auf einen erfindungsgemäßen Schneideinsatz mit im wesentlichen viereckiger Grundform,
- Fig. 1a: einen Teilschnitt entlang der Linie A - A,
- Fig. 1b: eine geschnittene Teilansicht eines Schneideinsatzes mit Darstellung des ablaufenden Spanes,
- Fig. 2: eine Draufsicht auf eine alternative Ausführungsform eines im wesentlichen viereckigen Schneideinsatzes,
- Fig. 2a: einen Schnitt entlang der Linie B - B,
- Fig. 3 und 4: jeweils andersartige Grundformen eines viereckigen Schneideinsatzes,
- Fig. 5: eine Schnittansicht des erfindungsgemäßen Bohrwerkzeuges mit drei Schneideinsätzen, im Arbeitseinsatz,
- Fig. 6a: eine Schnittansicht eines erfindungsgemäßen Bohrwerkzeuges und
- Fig. 6b: eine Stirnansicht des Bohrwerkzeuges nach Fig. 6a.
- Fig. 7a, b: jeweils Teilschnittansichten eines Schneidein-Satzes der in einem Bohrloch vorgetrieben wird,
wobei die Fig. 3 bis 7b Darstellungen ohne Spanformelemente zeigen.

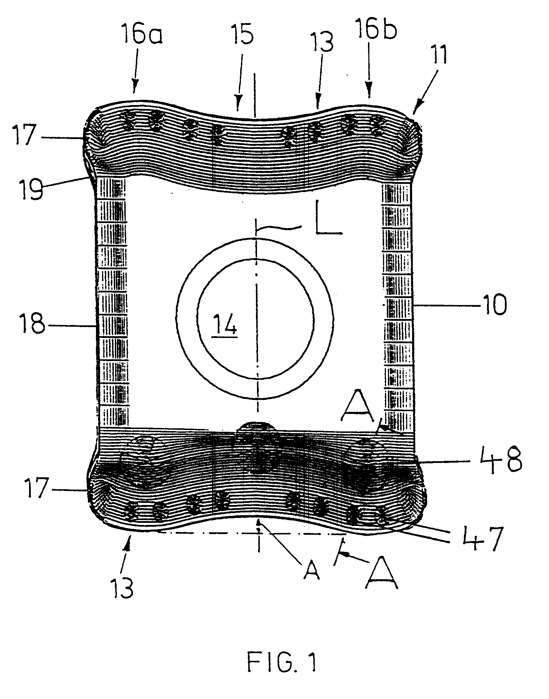

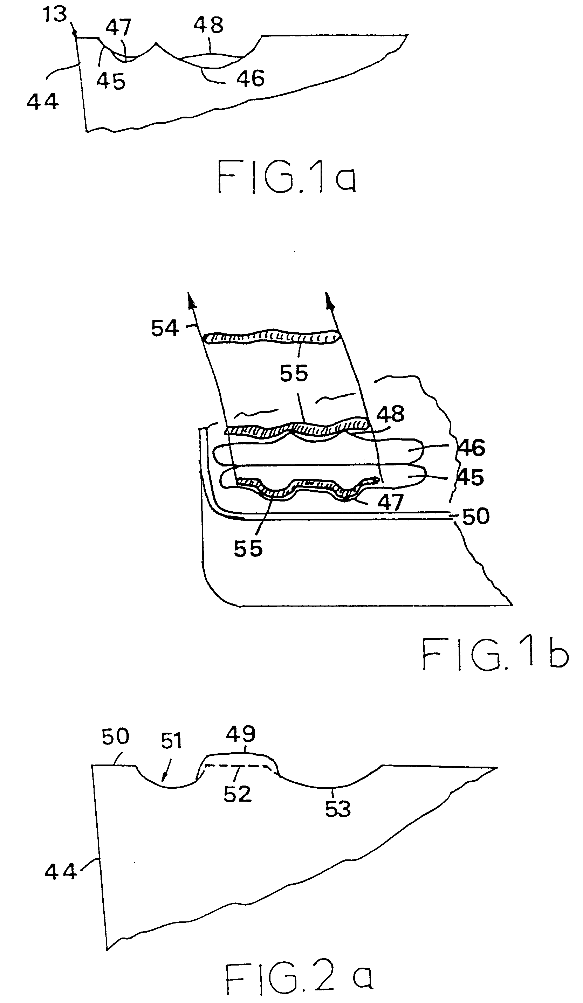

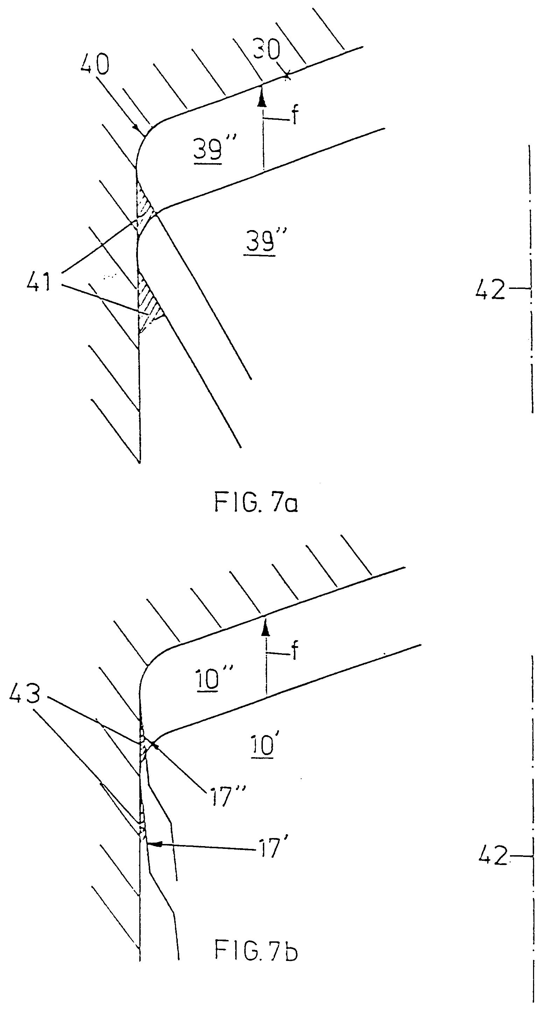

Der in Fig. 1 dargestellte Schneideinsatz 10 besitzt eine im wesentlichen viereckige Grundform mit vier Schneidecken 11, welche die Spanfläche 12 zusammen mit den Schneidkanten 13 sowie den Längsseitenkanten 18 begrenzen. In nach dem Stand der Technik bekannter Weise besitzt der Schneideinsatz ein Befestigungsloch 14. Jede der beiden gegenüberliegenden Schneidkanten 13 besitzt eine etwa in der Mitte befindliche Mulde 15 sowie beidseitig und achsensymmetrisch zu der Mulde zwei Schneidspitzen 16a und 16b, die hier abgerundet sind. Zur Seite hin einer jeden Ecke 11 besitzt der Schneideinsatz Verlängerungen 17, die im wesentlichen zur Bohrlochlängsachse bzw. der hier angedeuteten Längsachse L angeordnet sind. Diese Verlängerungen 17 dienen beim Bohrvortrieb als Nebenschneidkante, was noch anhand der Fig. 7a und 7b erläutert werden wird. Die Nebenschneidkante 17 hat eine Länge, die etwa der Vorschublänge bei einer Umdrehung des Bohrers entspricht, sie liegt in der Größenordnung bis zu 4/10 mm. Als Überbrückung zu der langen Seitenfläche 18 dient die Abschrägung 19, die unter einem Winkel bis zu 25° verläuft.

Wie aus Fig. 1a ersichtlich, besitzt der Schneideinsatz im Anschluß an eine an die Schneidkante 13 angrenzende Fase zwei unmittelbar aneinanderstoßende parallel zur Schneidkante 13 durchgehend verlaufende Spanformnuten 45 und 46. In der ersten Spanformnut 45 sind Vertiefungen 47 angeordnet, die in einer Draufsicht betrachtet entweder kreisförmig oder, wie dargestellt, länglich-rund sein können. In der zweiten Spanformnut 46 befinden sich Erhöhungen 48 (erhabene Spanformelemente), die eine Kugelsegmentform aufweisen und im Vergleich zu den davorliegenden einzelnen Spanformelementen 47 im Durchmesser größer ausgebildet sind. Es sind jedoch auch Variationen denkbar, bei denen in beiden Spanformnuten 45 und 46 Vertiefungen oder Erhöhungen oder auch umgekehrt, wie in der Zeichnung Fig. 1 dargestellt, in der ersten Spanformnut Erhöhungen 48 und in der zweiten Spanformnut 46 Vertiefungen angeordnet sind. Die Spanformelemente 47 und 48 sind vorzugsweise gegeneinander versetzt, was aus Fig. 1 anhand der Maxima bzw. Minima und deren Lage erkennbar ist.

Fig. 1b zeigt jeweils drei Längsschnitte durch den ablaufenden Span beim Kontakt der schneidkantennahen Spanformelemente, d.h. Vertiefungen 47, sowie beim Kontakt der schneidkantenfernen Spanformelemente, der Erhöhungen 48 sowie in einer von der Spanfläche losgelösten Stellung. Im Anschluß an die Fase 50 ist im vorliegenden Fall eine Doppelnut 45, 46 ausgebildet, wobei die Spanfläche perspektivisch dargestellt ist, um die Spanlaufrichtung (Pfeil 54) deutlich zu machen. Aus Fig. 1b ist insbesondere auch erkennbar, daß die Erhöhungen 48 gegenüber den Vertiefungen 47 in Spanablauf leicht gegeneinander seitlich versetzt sind, wodurch der Span beim Kontaktieren der schneidkantenfernen Spanformelemente eine weitere Abhebung bzw. Aufbiegung erfährt.

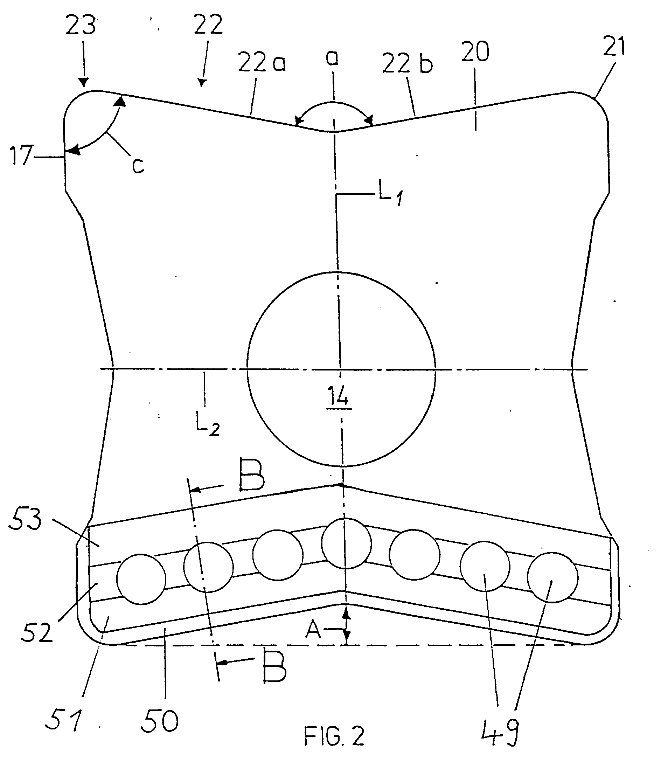

Eine Abwandlung des vorbeschriebenen Schneideinsatzes ist Fig. 2 zu entnehmen. Dieser Schneideinsatz ist im Gegensatz zu dem Schneideinsatz nach Fig. 1 nicht länglich, sondern quadratisch ausgebildet, wobei der Schneideinsatz 20 ebenso vier Schneidecken 21 mit dazwischenliegenden Schneidkanten 22 besitzt, deren Schneidkantenteilbereiche 22a und 22b unter Bildung eines Winkels a von etwa 160° zueinander geneigt sind. Hierdurch werden pro Schneidkante im Eckenbereich jeweils zwei Schneidspitzen 23 gebildet, wobei sich ein Schneideckenwinkel c von ca. 70° ergibt. Im Anschluß an die Schneidkante 23 ist ebenfalls eine Verlängerung 17 ausgebildet. Zu den Längsachse L₁ und L₂ ist der Schneideinsatz jeweils spiegelsymmetrisch ausgebildet. Aus einem Schnitt entlang der Linie B - B nach Fig. 2a erkennt man, daß an die Fase 50 eine erste Spanformnut 51 angrenzt, hieran eine in gleicher Höhe wie die Fase 50 angeordnete Leiste 52, auf der sich erhabene Spanformelemente 49 befinden, deren Größe so gewählt ist, daß sie in die vordere Spanformnut 51 sowie die hinter der Leiste 52 parallel zur Schneidkante 13 angeordnete weitere Spanformnut 53 hineinragen.

Im folgenden werden weitere Ausführungsformen der Schneideinsätze dargestellt, allerdings der Übersicht halber ohne Spanformelemente, deren Form den nach dem Stand der Technik bekannten Formen entsprechen kann, insbesondere wie sie anhand der in der Beschreibungseinleitung beschriebenen Druckschriften bekannt sind.

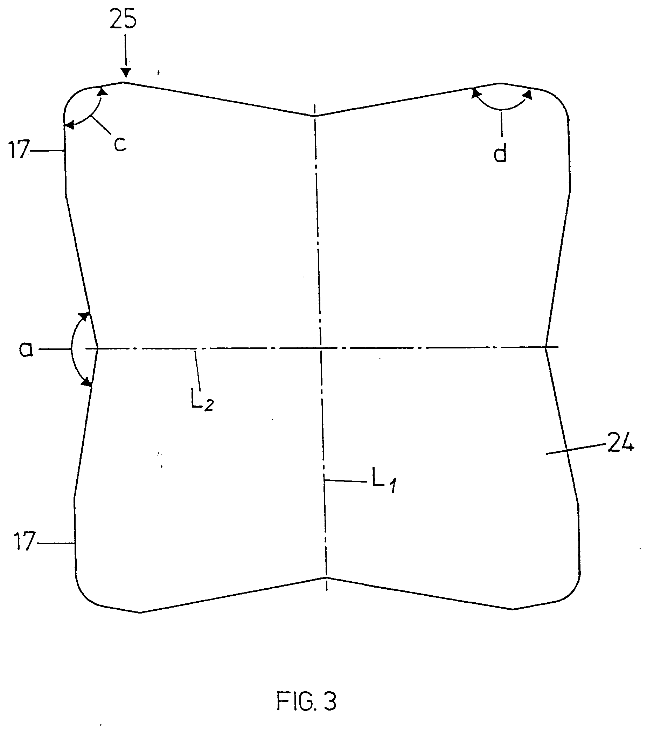

Eine Ausführungsvariante des Schneideinsatzes nach Fig. 2 ist Fig. 3 zu entnehmen. Auch hier besteht Achsensymmetrie zu den Achsen L₁ und L₂, jedoch besitzt der Schneideinsatz 24 keine abgerundeten Spitzen 16a und 16b oder 23, sondern jeweils Spitzen 25, die unter einem Winkel d von etwa 160° jeweils im äußeren Teil der Hauptschneidkante angeordnet sind. Die Verlängerungen 17 sind hier konvex gewölbt ausgeführt, ohne daß sich hierdurch etwas an dem Erfindungsprinzip ändert, diese Verlängerung 17 als Schlichtkanten zu benutzen.

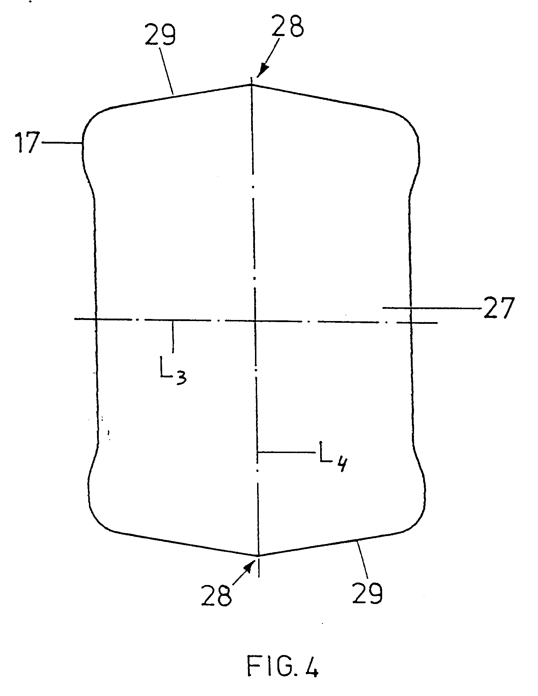

Der in Fig. 4 dargestellte Schneideinsatz 27 entspricht im wesentlichen dem Schneideinsatz nach Fig. 1 und ist ebenfalls länglich-rechteckig ausgebildet. Jede der zu der Querachse L₃ spiegelsymmetrisch ausgebildeten Schneidkanten 29 besitzt eine Schneidspitze 28, die mittig angeordnet ist und einen stumpfen Winkel bildet. Entsprechend gebrochen ist auch die an die Schneidkante 29 sich anschließende Seitenfläche. Auch in diesem Ausführungsbeispiel besitzt im Anschluß an jede Schneidecke die Schneidkante 29 eine Verlängerung 17, die im wesentlichen parallel zur Bohrlochlängsachse bzw. zur Längsachse L hier ausgerichtet ist.

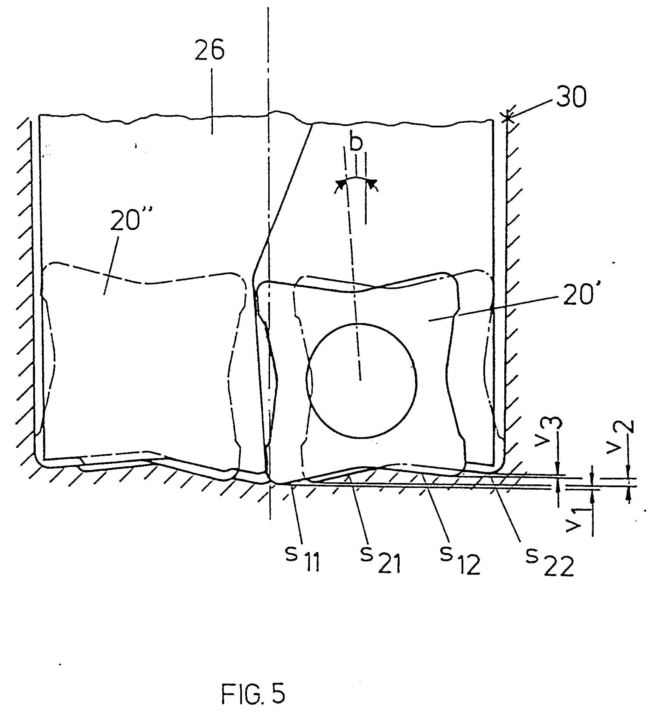

Ein erfindungsgemäßes Bohrwerkzeug, daß mit zwei Schneideinsätzen 20 entsprechend Fig. 2 bestückt ist, ist in Fig. 5 dargestellt. An einem Schaft 26 ist stirnseitig auf gegenüberliegenden Bohrerhälften jeweils ein Schneideinsatz 20' bzw. 20'' angeordnet, wobei sich die Arbeitsbereiche dieser Schneideinsätze überlappen, wie es aus der rechten Bohrerhälfte durch die strichpunktierte Darstellung des Schneideinsatzes 20'' erkennbar ist. Die Bohreraufnahmen sind um 180° gegeneinander versetzt. Der innere Schneideinsatz 20' überschreitet geringfügig die Bohrerlängsachse und ist hinsichtlich seiner Senkrechten auf einer Verbindungslinie der die wirksame Schneidkante begrenzenden Schneidecken gegenüber der Schaftlängsachse um einen Winkel b von etwa 5° ebenso geneigt wie die betreffende Senkrechte des anderen Schneideinsatzes. Der Schneideinsatz 20'' ist zusätzlich gegenüber dem Schneideinsatz 20' geringfügig um das Maß v₁ nach hinten versetzt, das bei etwa 0,1 mm liegt. Beim Bohren in Vollmaterial 30 kommt beim Ansetzen des Bohrers zunächst die Schneide s₁₁ bzw. die innenliegende Schneidspitze mit dem Werkstück 30 in Eingriff. Durch den gewählten Neigungswinkel b der beiden Schneideinsätze und das Maß der Zurückversetzung v₁ des äußeren Schneideinsatzes 10'' gegenüber dem inneren Schneideinsatz 10' eilt wiederum die erste Schneide s₂₁ des äußeren Schneideinsatzes 20'' mit ihrer Spitze der Spitze des Schneidenteilbereiches s₁₂ um das Maß v₂ voraus, das ebenfalls 0,1 mm beträgt. Entsprechendes gilt für die Voreilung der Spitze der Schneide s₁₂ und der Schneide s₂₂, die um daß Maß v₃ von 0,1 mm versetzt sind. Bei jedem Schneideinsatz 20' und 20'' bilden die zugehörigen Schneidbereiche s₁₁ und s₁₂ bzw. s₂₁ und s₂₂ jeweils Führungsflächen, so daß beim Bohren insgesamt pro Wendeschneidplatte zwei Späne entstehen.

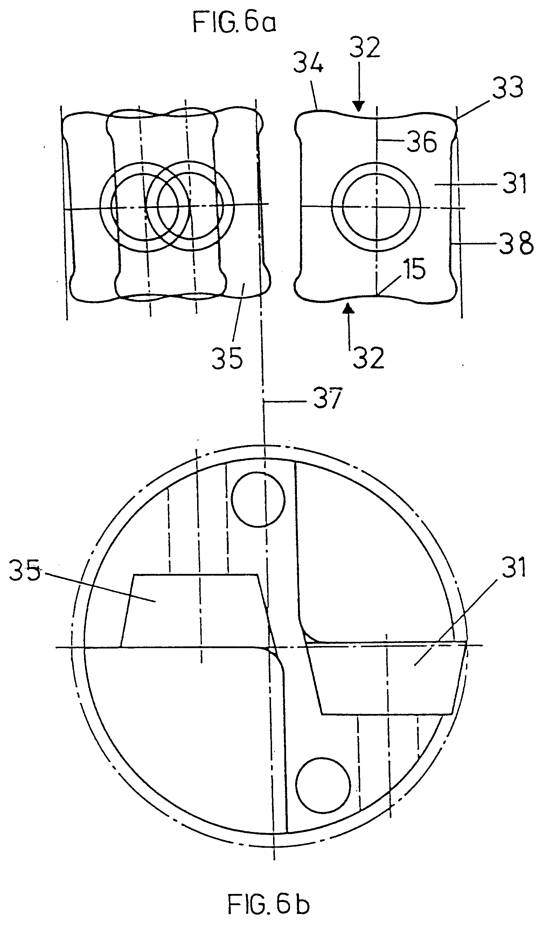

Einen Schneideinsatz entsprechend der in Fig. 1 dargestellten Ausführungsform zeigen Fig. 6a und 6b. Der Schneideinsatz 31 besitzt zwei Schneidkanten 32 auf gegenüberliegenden Seiten, von denen jede eine in der Schneidkantenmitte ausgeprägte konvexe Form besitzt. Durch die Verbreiterung der Schneidecken 33 werden pro Schneidkante 32 jeweils zwei Schneidspitzen 34 gebildet, die abgerundet ausgeführt sind. Die um 180° versetzte Einbaulage der Schneideinsätze 31 und 35 ist aus Fig. 6b erkennbar. Beide Schneideinsätze 31 und 35 sind hinsichtlich ihrer Mittellängsachse 36 gegenüber der Bohrerlängsachse 37 um einen Winkel von 5° geneigt. Die langen Seitenflächen 38 der Schneideinsätze 31 und 35, die nicht als Schneidkante ausgebildet sind, können gleich groß oder länger als die Schneidkante 32 ausgestaltet sein.

Die Funktionsweise der Verlängerungen 17 ergibt sich aus Fig. 7a und 7b. Der in Fig. 7a teilweise dargestellte Schneideinsatz wird beim Bohren in ein Vollmetall um einen Bohrfortschritt f vorangetrieben, wobei jeweils nach einer Umdrehung des Bohrers die Stellung eines Schneideinsatzes als 39' und 39'' dargestellt ist. Die Schneidecke 40 dieses Schneideinsatzes beschreibt beim Bohrfortschritt tatsächlich eine Wendel, wodurch es zu einem jeweiligen Grat 41 kommt, der jeweils durch den Schneideckenwinkel in der Größe bestimmt wird. Mit Bezugszeichen 42 ist die jeweilige Bohrlochlängsachse dargestellt. Beim Einsatz eines erfindungsgemäßen Schneideinsatzes und entsprechend der Darstellung in Fig. 7b bewirkt die Verlängerung ein weiteres Schlichten des Gratansatzes 41, wodurch der verbleibende Grat 43 nahezu verschwindend klein ausgebildet ist.

## Patentansprüche

1. Schneideinsatz für die spanende Bearbeitung, insbesondere zum Bohren, mit mindestens einer Schneidkante (13, 22, 32), einer hieran zur Schneideinsatzspanflächenmitte hin anschließenden Fase (50), entweder mit zwei parallel zur Schneidkante (13, 22, 32) durchgehend verlaufenden Spanformnuten (45, 46, 51, 53) und sich entlang und parallel der Schneidkante jeweils voneinander getrennt erstreckenden Spanformelementen (47, 48, 49), die jeweils vollständig in einer Spanformnut (45, 46; 51, 53) oder im Übergangsbereich zwischen den Spanformnuten angeordnet sind oder mit einer parallel zur Schneidkante (13, 22, 32) durchgehend verlaufenden einzigen Spanformnut (45) mit mindestens zwei zur Schneidkante parallelen Reihen von erhabenen und/oder sickenförmigen Spanformelementen (47, 48), die in unterschiedlichem Abstand zur Schneidkante liegen und seitlich gegeneinander versetzt sind.

2. Schneideinsatz nach Anspruch 1, dadurch gekennzeichnet, daß die Spanformelemente Vertiefungen (47) und/oder Erhöhungen (48) sind.

3. Schneideinsatz nach Anspruch 1 oder 2, dadurch gekennzeichnet, daß entlang der Schneidkante (13, 22, 32) im vorderen schneidkantennahen Bereich Vertiefungen und/oder Erhöhungen angeordnet sind und/oder daß im von der Schneidkante (13, 22, 32) aus gesehen hinteren Bereich der zweiten oder hinteren Spanformnut (46, 53) weitere Vertiefungen (47) und/oder Erhöhungen (48) angeordnet sind.

4. Schneideinsatz nach einem der Ansprüche 1 bis 3, dadurch gekennzeichnet, daß die Spanformelemente (47, 48, 49) unterschiedlich groß sind, wobei vorzugsweise die Spanformelemente (47 bis 49) im schneidkantenferneren Bereich größer sind als solche im Schneidkantennahen Bereich.

5. Schneideinsatz nach einem der Ansprüche 1 bis 4, dadurch gekennzeichnet, daß jede eine Hauptschneidkante (13, 22, 29, 32) begrenzende Schneidecke (11, 21, 33, 40) jenseits der Hauptschneidkante eine als Nebenschneidkante ausgebildete Verlängerung (17) aufweist, die im wesentlichen zur Schneideinsatzlängsachse (L) parallel oder hiergegen unter einem Winkel von höchstens 10°, vorzugsweise 1° bis 2°, geneigt ist.

6. Schneideinsatz nach Anspruch 5, dadurch gekennzeichnet, daß die Schneidecke (11) zwischen der Verlängerung (17) und einer Schneidspitze (16a, 16b, 25) gerade Schneideckenbereiche aufweist, wobei mindestens eine der Hauptschneidkanten (13, 22, 32) mindestens zwei vorstehende Schneidspitzen (16a, 16b; 23, 25, 34) aufweist, vorzugsweise pro Schneidkante (13, 22, 32) entsprechend der Anzahl der Schneidspitzen gleich viele Schneidbereiche (22a, 22b; s₁₁, s₁₂; s₂₁, s₂₂) ausgebildet sind.

7. Schneideinsatz nach Anspruch 6, dadurch gekennzeichnet, daß jede der Schneidkanten (13, 22, 32) eine im wesentlichen konkave Form mit einer Einschnürung (15) aufweist, die sich vorzugsweise in der Mitte der Schneidkante befindet und/oder zwei Schneidkantenteilbereiche (22a, 22b; s₁₁, s₁₂; s₂₁, s₂₂) gebildet werden, die einen Winkel (a) von weniger als 170° einschließen.

8. Schneideinsatz nach einem der Ansprüche 6 oder 7, dadurch gekennzeichnet, daß die Schneidecken (11, 21) abgerundet und/oder mit vergrößertem Eckenwinkel (c) ausgeführt sind.

9. Schneideinsatz nach Anspruch 5, dadurch gekennzeichnet, daß er in einer Spanflächendraufsicht eine im wesentlichen rechteckige Kontur hat, wobei zwei gegenüberliegende Seitenflächen mit ihren Schneidkanten (29) in der Mitte zu einer Schneidspitze (28) so gebrochen sind, daß sie jeweils einen stumpfen Winkel an der Bruchstelle bilden und daß jede der vier gebildeten Schneidecken eine als Nebenschneidkante ausgebildete Verlängerung (17) aufweist, die gegenüber den längeren Seitenflächen einen Vorsprung bildet, der unter einem spitzen Winkel in die längere Seitenfläche übergeht.

10. Schneideinsatz nach Anspruch 9, dadurch gekennzeichnet, daß der spitze Winkel 15° bis 25° beträgt.

## Claims

1. Cutting insert for material-removing machining, in particular drilling, with at least one cutting edge (13, 22, 32), a land (50) offset therefrom toward the center of the rake of the cutting insert, either two chip-forming grooves (45, 46, 51, 53) extending full length parallel to the cutting edge (13, 22, 32), and along and parallel to the cutting edge separate chip-forming elements (47, 48, 49), which are arranged wholly in a chip-forming groove (45, 46, 51, 53) or between the chip-forming grooves, or one chip-forming groove (45) extending full length parallel to the cutting edge (13, 22, 23) and with at least two rows of raised and/or groove-shaped chip-forming elements (47, 48) being arranged at different distances to the cutting edge and being offset laterally to each other, the rows being parallel to the cutting edge.

2. Cutting insert according to claim 1, characterised in that the chip-forming elements are pits (47) and/or bumps (48).

3. Cutting insert according to claim 1 or 2, characterised in that pits (47) and/or bumps (48) are arranged along the cutting edge (13, 22, 32) in the front region adjacent the cutting edge and/or that in the region set back from the cutting edge (13, 22, 31) of the second or back chip-forming groove (46, 53) there are further pits (47) and/or bumps (48).

4. Cutting insert according to one of claims 1 to 3, characterised in that the chip-forming elements (47, 48, 49) are of different sizes, whereby preferably the chip-forming elements (47, 48, 49) in the region remote from the cutting edge are bigger than those near the cutting edge.

5. Cutting insert according to one of claims 1 to 4, characterised in that each of the cutting corners (11, 21, 33, 40) bordering a main cutting edge (13, 22, 29, 32) has on the other side of the main cutting edge an extension (17) formed as a secondary cutting edge which is generally parallel to the cutting insert longitudinal axis (L) or slightly inclined at an angle of at most 10° thereto, preferably 1° to 2°.

6. Cutting insert according to claim 5, characterised in that the cutting corner 811) has between the extension (17) and the cutting point (16a, 16b, 25) straight cutting corner regions, whereby at least one of the main cutting edges (13, 22, 32) has at least two projecting cutting points (16a, 16b, 23, 25, 34), preferably per cutting edge (13, 22, 32) there is a number of cutting regions (22a, 22b, s₁₁, s₁₂, s₂₁, s₂₂) equal to the number of cutting points.

7. Cutting insert according to claim 6, characterised in that each of the cutting edges (13, 22, 32) has a generally concave shape with a setback (15) which is preferably in the middle of the cutting edge and/or two partial cutting-edge portions (22a, 22b, s₁₁, s₁₂, s₂₁, s₂₂) are formed which form an angle (a) of less than 170°.

8. Cutting insert according to one of claims 6 or 7, characterised in that the cutting corners (11, 21) are made round and/or with an enlarged apex angle (c).

9. Cutting insert according to claim 5, characterised in that it has seen from above on the rake face a generally rectangular shape with two opposite side surfaces with their cutting edges (29) so interrupted in the middle at their cutting points (28) that they form an obtuse angle at the interruption and that each of the four formed cutting corners has an extension (17) forming an auxiliary cutting edge which forms a projection relative to the longer side surface and that extends at an acute angle in the longitudinal side surfaces.

10. Cutting insert according to claim 9, characterised in that the acute angle is 15° to 25°.

## Revendications

1. Insert de coupe pour l'usinage à enlèvement de copeaux, en particulier pour le perçage, comprenant du moins un tranchant (13, 22, 32), un chanfrein (50) contigu à cela vers le milieu de la face de coupe de l'insert de coupe, soit avec deux rainures (45, 46, 51, 53) à former le copeau, qui s'étendent de façon continue parallèlement au tranchant (13, 22, 32) et avec des éléments (47, 48, 49) à former le copeau qui s'étendent le long du et parallèlement au tranchant, respectivement de manière séparée l'un de l'autre et qui sont disposés respectivement complètement dans une rainure (45, 46; 51, 53) à former le copeau ou dans la zone de transition entre les rainures à former le copeau, soit avec une seule rainure à former le copeau (45) qui s'étend de façon continue parallèlement au tranchant (13, 22, 32), avec du moins deux rangées parallèles au tranchant, formées d'éléments à former le copeau (47, 48) élevés et/ou en forme de cannelures, qui sont situés à une distance différente du tranchant et sont décalés latéralement l'un contre l'autre.

2. Insert de coupe selon la revendication 1, caractérisé par le fait que les éléments à former le copeau sont des creux (47) et'ou élévations (48).

3. Insert de coupe selon la revendication 1 ou 2, caractérisé par le fait que des creux et/ou élévations sont disposés le long du tranchant (13, 22, 32) dans la zone avant située près du tranchant, et/ou que d'autres creux (47) et/ou élévations (48) sont disposés - vu du tranchant (13, 22, 32) - dans la zone arrière de la deuxième rainure ou rainure arrière à former le copeau (46, 53).

4. Insert de coupe selon l'une des revendications 1 à 3, caractérisé par le fait que les éléments à former le copeau (47, 48, 49) présentent des grandeurs différentes, de préférence les éléments à former le copeau (47 à 49) qui se trouvent dans la zone située plus loin du tranchant étant plus grands que ceux se trouvant dans la zone située près du tranchant.

5. Insert de coupe selon l'une des revendications 1 à 4, caractérisé par le fait que chaque coin de coupe (11, 21, 33, 40) limitant un tranchant principal (13, 22, 29, 32) présente de l'autre côté du tranchant principal un prolongement (17) formé en tant que tranchant secondaire, qui est pour l'essentiel parallèle à l'axe longitudinal (L) de l'insert de coupe ou est inclinée par rapport à cela à un angle de 10° au maximum, de préférence à un angle compris entre 1° et 2°.

6. Insert de coupe selon la revendication 5, caractérisé par le fait que le coin de coupe (11) présente des zones droites du coin de coupe entre le prolongement (17) et une pointe de coupe (16a, 16b, 25), un du moins des tranchants principaux (13, 22, 32) présentant du moins deux pointes de coupe en saillie (16a, 16b; 23, 25, 34), de préférence le nombre des zones de coupes (22a, 22b; s₁₁, s₁₂; s₂₁, s₂₂) réalisées par tranchant (13, 22, 32) étant égal au nombre des pointes de coupe.

7. Insert de coupe selon la revendication 6, caractérisé par le fait que chacun des tranchants (13, 22, 32) présente une forme pour l'essentiel concave avec un étranglement (15) qui, de préférence, est situé au milieu du tranchant, et/ou que deux zones partielles (22a, 22b; s₁₁, s₁₂; s₂₁, s₂₂) de tranchant sont formées, qui incluent un angle (a) de moins de 170°.

8. Insert de coupe selon l'une des revendications 6 ou 7, caractérisé par le fait que les coins de coupe (11, 21) sont réalisés de façon arrondie et/ou avec un angle agrandi de coin (c).

9. Insert de coupe selon la revendication 5, caractérisé par le fait que, dans une vue de dessus sur la face de coupe, il présente un contour pour l'essentiel rectangulaire, deux surfaces latérales opposées avec leurs tranchants (29) étant rompues au milieu pour former une pointe de coupe (28) de telle manière qu'ils forment respectivement un angle obtus au point de rupture, et que chacun des quatre coins de coupe formés présente un prolongement (17) qui est réalisé en tant que tranchant secondaire et forme une projection par rapport aux surfaces latérales plus longues, qui s'étend à un angle aigu dans la surface latérale plus longue.

10. Insert de coupe selon la revendication 9, caractérisé par le fait que l'angel aigu est compris entre 15° et 25°.
